# EUROPEAN PATENT APPLICATION

(11) **EP 4 279 372 A1**
(43) Date of publication of application: **22.11.2023**
(21) Application number: 22315109.3
(22) Date of filing: 20.05.2022
(51) Int. Cl.: B63B 21/50, F03D 13/25, B63B 35/44, B63B 21/00

(54) **SUBSEA CONFIGURATION FOR FLOATING STRUCTURES OF AN OFFSHORE WIND FARM**

(71) Applicant: TotalEnergies OneTech, 92400 Courbevoie (FR)
(72) Inventor: Barrier, Philippe, 92270 BOIS-COLOMBES (FR); Le-Guennec, Stéphane, 78380 BOUGIVAL (FR)
(74) Representative: Croonenbroek, Thomas Jakob

(57) **Abstract**

The present invention relates to an offshore wind farm (1) comprising at least three floating structures (3) designed to receive a wind turbine (4), each floating structure (3) comprising at least three mooring lines (5', 5"), each mooring line (5', 5") being attached to a mooring point (51, 52, 53) arranged around said floating structure (3), the mooring lines facing inward from the offshore wind farm (1) forming the inner mooring lines (5') of the offshore wind farm (1) and the mooring lines facing outward from the offshore wind farm (1) forming the peripheral mooring lines (5") of the offshore wind farm (1), wherein the peripheral mooring line (5") comprise:
- a first segment (22) able to be attached to the floating structures (3),
- at least one intermediate segment (26) formed of an elastomeric material attached to the first segment (22) and the second segment (24).

## Description

### TECHNICAL FIELD:

The present invention relates to a subsea configuration of floating structures for an offshore wind farm. More precisely, the present invention relates to the subsea configuration for floating structures anchored on the seabed for water depths greater than 400 m.

### BACKGROUND:

For depths up to 60 m, it is well known to use support structures, like jacket structures, for offshore wind turbines. Such a support structure rests on the seabed and is fixed to the ground with anchor devices. The support structure extends above the sea level to receive a wind turbine mast. Generally, this support structure is made of one piece and the greater the depth is, the higher the support structure must be.

For greater depths for example greater than 60 m, the offshore wind turbines are generally not installed on support structures resting on the seabed but are installed on floating structures moored to the seabed with mooring lines.

In offshore wind farm, the spacing between wind turbines is governed by yield constraints, for example due to the wake effects. Thus, two adjacent wind turbines are typically spaced by six to eight times the turbine rotor diameter depending on the considered direction. For example, two adjacent wind turbines aligned in the dominant wind direction may be spaced by eight times the turbine rotor diameter in order to minimize the wake effects and in order that the wind turbine placed behind has a greater productivity. Two adjacent wind turbines not aligned in the dominant wind direction could be closer to each other for example spaced by six times the turbine rotor diameter in order to maximize the density of wind turbines in the offshore wind farm. While going in greater water depths, for example greater than 400 m, it is more challenging to maintain such a wind farm layout due to the footprint of the mooring system. In addition to layout constraints, standard mooring configurations in deep waters imply longer mooring lines, which means higher costs. In order to push the development of offshore wind energy in these areas, cheaper solutions need to be developed regarding subsea arrangement in particular for the mooring configuration.

Standard mooring configuration typically requires a minimum pattern of 1.4 x water depth to 1.8 × water depth. In deep waters, these mooring footprints could be accommodated by considering different floating structures orientation between adjacent wind turbines to avoid clashes between mooring lines. However, this would lead to a very complex and congested layout and would require additional engineering effort due to the different floating structures orientations to be studied. In order to reduce costs, a mooring layout based on mutualized anchors (between adjacent mooring lines) is known. However, this solution could not be considered in very deep waters where mooring lines would be crossing before reaching the optimized location for this mutualized anchoring point.

A solution of mooring configuration based on shared mooring lines have been developed for example with shared anchoring points onto the seabed, as describe in document CN210653580 or with shared anchoring point onto common floating buoys, as described in document CN111071400. However, these solutions provide very low restoring loads to the floating structures when it moves out from the equilibrium position due to external loads, and then leads to very high offsets. These very high offsets would be problematic for the mooring lines themselves and for other equipment linked to the floating structures like electrical inter-array cables.

One aim of the present invention is to provide an enhanced and cheap mooring configuration for an offshore wind turbine adapted for depths greater than 400 m and having a limited footprint.

To this end, the invention relates to an offshore wind farm comprising at least three floating structures designed to receive a wind turbine, each floating structure comprising at least three mooring lines, each mooring line being attached to a mooring point arranged around said floating structure, the mooring lines facing inward from the offshore wind farm forming the inner mooring lines of the offshore wind farm and the mooring lines facing outward from the offshore wind farm forming the peripheral mooring lines of the offshore wind farm,
wherein at least one peripheral mooring line comprises:
- a first segment able to be attached to the floating structures,
- at least one intermediate segment formed of an elastomeric material attached to the first segment and the second segment.

Two adjacent floating structures may have at least one of their peripheral mooring lines having a common junction point above the seabed, this common junction point being attached to a peripheral submerged buoy moored to the seabed, this peripheral submerged buoy comprising a tether moored to the seabed and at least one additional mooring line connecting the peripheral submerged buoy to a mooring point on the seabed.

The peripheral submerged buoy may comprise two additional mooring lines, each additional mooring line being aligned with a peripheral mooring line attached to the peripheral submerged buoy.

The peripheral submerged buoy may be moored to the seabed with a flexible tether having a limited height with the seabed.

The peripheral submerged buoy may be placed at least at 50 m above the seabed.

The mooring lines may be made of fiber ropes.

The floating structures may be placed in such a way that the mooring lines form a hexagonal pattern.

The intermediate segment of the peripheral mooring lines may be able to provide a maximal extension greater than 100 % of the rest length of the intermediate segment, advantageously a maximal extension greater than 300 %;

The intermediate segment may present a minimal breaking strength greater than 18 MPa, advantageously greater than 25 Mpa.

The intermediate segment may present a minimal breaking load greater than 400 t, advantageously greater than 1200 t.

The intermediate segment may present a creep lower than 20%, advantageously lower than 10%.

The intermediate segment may present a cumulative length lower than 40 m, advantageously lower than 15 m.

The intermediate segment may be made of a single material.

The single material may be chosen between:
- natural rubber;
- thermoplastic elastomer;
- polychloroprene; and
- hydrogenated nitrile butadiene rubber.

The intermediate segment may be a multi-stranded line.

Further features and advantages of the invention will become apparent from the following description, given by way of non-limiting example, with reference to the appended drawings, in which:
- Figure 1 is a side view of a schematic representation of an offshore wind farm of wind turbines with their mooring lines,
- Figure 2 is a top view of a schematic representation of the offshore wind farm of wind turbines of figure 1,
- Figure 3 is a top view of a schematic representation of the offshore wind farm of wind turbines according to a second embodiment,
- Figure 4 is a schematic representation in perspective of the mooring of peripheral mooring lines of an offshore wind farm,
- Figure 5 is a schematic view of a floating wind turbine platform moored to the seabed by a peripheral mooring line,
- Figure 6 is a schematic view of a floating wind turbine platform moored to the seabed by another embodiment of the mooring line.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### DETAILED DESCRIPTION

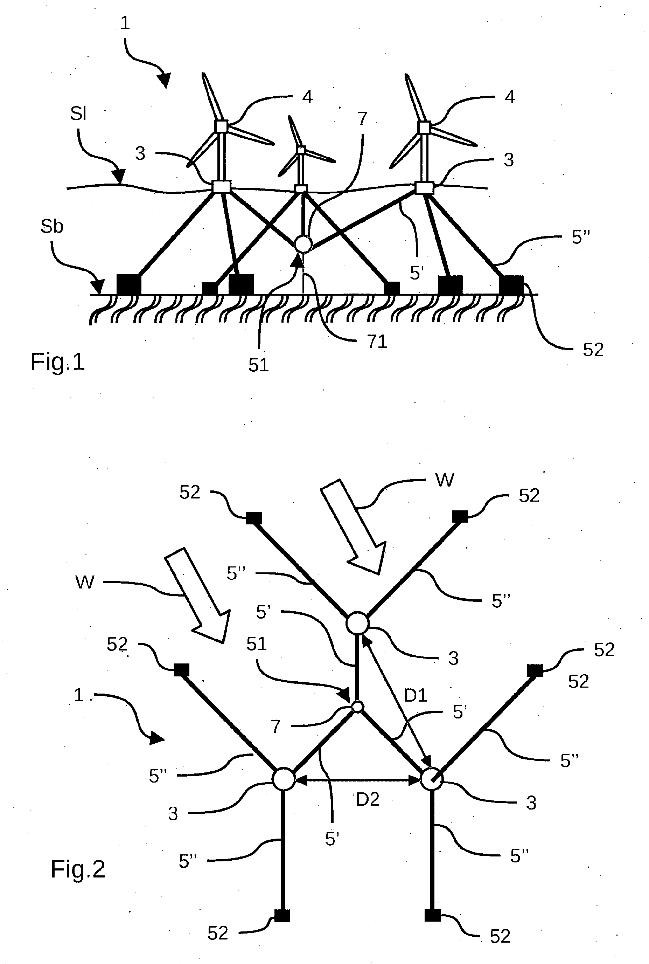

Figure 1 shows an offshore wind farm 1 comprising at least three floating structures 3 designed to each receive a wind turbine 4. Each floating structure 3 comprises at least three mooring lines 5', 5" in order to moor the floating structure 3 to the seabed. Each mooring line 5 is attached to a mooring point 51, 52, 53 arranged around the floating structure 3. The mooring lines 5', 5" may also be arranged around the floating structure 3 in a "Y" shape in order to maintain the floating structure 3 in any direction on the surface of the sea (see figure 2). The length of the mooting lines 5', 5" is dependent on their inclination and the water depth.

The mooring lines facing inward from the offshore wind farm 1 (oriented towards the center or inner side of the wind farm defined by the peripheral floating structures 3) form the inner mooring lines 5' of the offshore wind farm 1 and the mooring lines facing outward from the offshore wind farm 1 (oriented towards the outer side of the wind farm) form the peripheral mooring lines 5" of the offshore wind farm 1.

The mooring lines 5', 5" may be made of fiber ropes or metallic cables made of metal strands. In particular, these fiber ropes may be made of polymeric fibers such as polyester, nylon or polyolefin like polypropylene or polyethylene.

As shown in figure 1, three adjacent floating structures 3 have at least one of their inner mooring lines 5' having a common junction point 51 above the seabed Sb. This common junction point 51 is attached to a submerged buoy 7 moored to the seabed Sb. The fact that the adjacent floating structures 3 have a common junction point 51 attached to a submerged buoy 7 allows bringing the adjacent floating structures 3 closer to each other. Thus, as shown in figure 2, the floating structures 3 and the wind turbines 4 could be spaced in an optimum way by, for example, a distance D1 about eight times the turbine rotor diameter for two floating structures 3 aligned in the dominant wind direction W. This distance D1 enables minimizing the wake effects and enables the wind turbine 4 placed behind to have a greater productivity. Two adjacent floating structures 3 not aligned in the dominant wind direction W may be spaced for example by a distance D2 about six times the turbine rotor diameter in order to maximize the density of wind turbines 4 in the offshore wind farm 1.

With these distances D1 and D2 between the floating structures 3, the common junction point 51 may be a point where the inner mooring lines 5' would have crossed each other. The depth of the submerged buoy 7 may also be determined by the common junction point 51 where the inner mooring lines 5' would have crossed each other. Thus, the footprint of the offshore wind farm 1 due to its mooring configuration is limited. Only one mooring point is needed with the submerged buoy 7 instead of three moorings points on the seabed. The length of the inner mooring lines 5' attached to the submerged buoy 7 is also reduced which permits a reduction of the costs. This is particularly advantageous for an offshore wind farm 1 installed in greater water depths, for example greater than 400 m.

The submerged buoy 7 is preferably an equipressure buoy. An equipressure buoy allows to reduce the external loads on the buoy once installed at its final depth. An equipressure buoy means a buoy where the inner pressure of the buoy is equal to the external pressure of the buoy, here the pressure at the depth the buoy is placed.

In order to minimize the constraints applied to the submerged buoy 7, the attachment points of the inner mooring lines 5' to the submerged buoy 7 may be placed below the submerged buoy 7. Thus, the submerged buoy 7 do not need to be sized up to the minimum breaking load of the inner mooring lines 5'.

Preferably, the submerged buoy 7 is moored to the seabed Sb with a flexible tether 71 having a limited height with the seabed Sb. This flexible tether 71 could be any means known by the skilled person in this domain. For example, the submerged buoy 7 could be moored by at least one cable or chain.

As this mooring configuration is preferably dedicate to water depths greater than 400 m, the submerged buoy 7 is preferably placed at least at 50 m above the seabed Sb. More specifically, the submerged buoy 7 is preferably placed at a maximum depth of 85% of the water depth. Thus, the flexible tether 71 has a length of at least 15% of the water depth. For example, for a water depth of 600 m, the submerged buoy 7 may be placed at least at a depth of 500 m with flexible tether 71 of 100 m.

As shown in figures 1 and 2, the peripheral mooring lines 5" are directly moored to the seabed Sb. More specifically, the peripheral mooring lines 5" are placed without crossing each other and are moored directly onto the seabed Sb at mooring points 52. The peripheral mooring lines 5" could be moored onto the seabed Sb by any means known by the skilled person in this domain. The fact that the peripheral mooring lines 5" are directly moored to the seabed Sb enables limiting the lateral movements of the offshore wind farm 1 in general and more specifically of the array of floating structures 3.

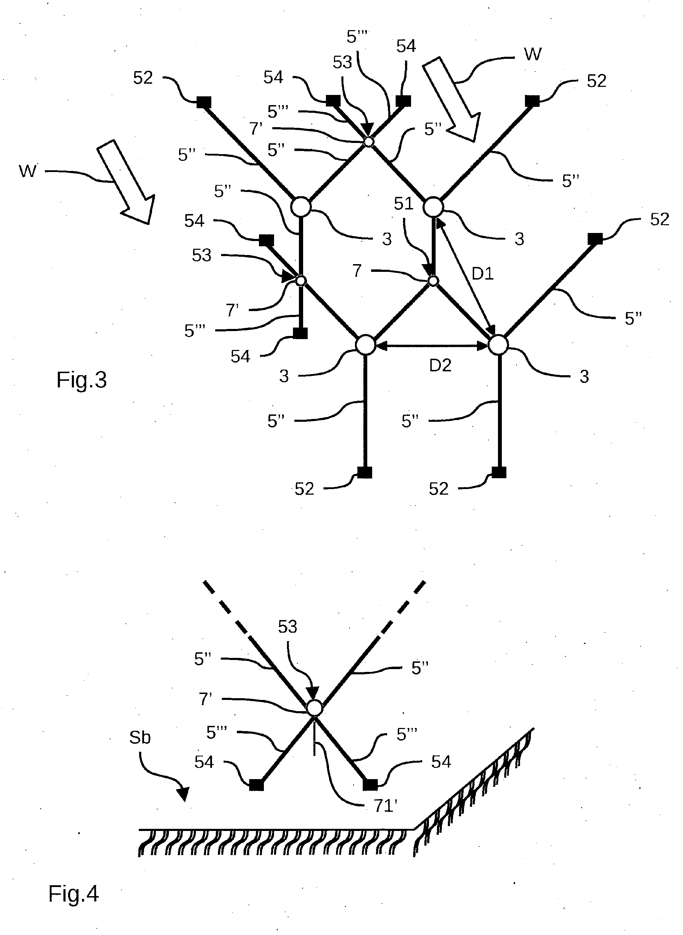

Figure 3 shows an offshore wind farm 1 with at least four floating structures 3. In this particular embodiment, two adjacent floating structures 3 have at least one of their peripheral mooring lines 5" crossing each other. At least one of these peripheral mooring lines comprises a buoyancy element.

According to a first embodiment not represented, only one of the crossing peripheral mooring lines 5" comprises a buoyancy element in order to pass above the other peripheral mooring line 5" without touching each other. This buoyancy element may be associated to an increased anchor radius. This buoyancy element could be a sleeve surrounding a portion of the peripheral mooring line 5". This buoyancy element could also be directly integrated into a portion the peripheral mooring line 5". Preferably, these two peripheral mooring lines 5" cross each other with a distance about at least 20 m.

According a second embodiment represented figures 3 and 4, two crossing peripheral mooring lines 5" have a common junction point 53 above the seabed Sb. The buoyancy element could be here a peripheral submerged buoy 7' moored to the seabed Sb and to which one the common junction point 53 is attached to. This peripheral submerged buoy 7' may comprise a tether 71' (visible in figure 4) moored to the seabed Sb and at least one additional mooring line 5‴ connecting the peripheral submerged buoy 7' to a mooring point 54 on the seabed Sb.

The additional mooring line 5‴ may be made of fiber ropes or metallic cables made of metal strands. In particular, these fiber ropes may be made of polymeric fibers such as polyester, nylon or polyolefin like polypropylene or polyethylene.

The common junction point 53 may be a point where the peripheral mooring lines 5" would have crossed each other. The depth of the peripheral submerged buoy 7' may also be determined by the common junction point 53 where the peripheral mooring lines 5" would have crossed each other. The length of the peripheral mooring lines 5" attached to the peripheral submerged buoy 7' is also reduced which permits a reduction of the costs. This is particularly advantageous for an offshore wind farm 1 installed in greater water depths, for example greater than 400 m.

Thus, the footprint of the offshore wind farm 1 due to the mooring configuration according to any one of the first or second embodiment is limited.

The peripheral submerged buoy 7' is preferably an equipressure buoy. An equipressure buoy allows to reduce the external loads on the buoy once installed at its final depth.

In order to minimize the constraints applied to the peripheral submerged buoy 7', the attachment points of the peripheral mooring lines 5" and the additional mooring line 5‴ to the peripheral submerged buoy 7' may be placed below the peripheral submerged buoy 7'. Thus, the peripheral submerged buoy 7' do not need to be sized up to the minimum breaking load of the peripheral mooring lines 5".

Preferably, the peripheral submerged buoy 7' is moored to the seabed Sb with a flexible tether 71' having a limited height with the seabed Sb. This flexible tether 71' could be any means known by the skilled person in this domain. For example, the peripheral submerged buoy 7' could be moored by at least one cable or chain.

As this mooring configuration is preferably dedicated to water depths greater than 400 m, the peripheral submerged buoy 7' is preferably placed at least at 50 m above the seabed Sb. More specifically, the peripheral submerged buoy 7' is preferably placed at a maximum depth of 85% of the water depth. Thus, the flexible tether 71' has a length of at least 15% of the water depth. For example, for a water depth of 600 m, the peripheral submerged buoy 7' may be placed at least at a depth of 500 m with flexible tether 71' of 100 m.

As shown in figures 3 and 4, the peripheral submerged buoy 7' comprises two additional mooring lines 5‴. Each additional mooring line 5‴ is preferably aligned with a peripheral mooring line 5" attached to the peripheral submerged buoy 7'.

As shown in figure 3, the floating structures 3 are preferably placed in such a way that the mooring lines 5', 5" form a hexagonal pattern. In the example illustrated in figure 3, the offshore wind farm 1 have four floating structures 3. A first tip is a floating structure 3, two side points are two junction points 51 and 53 linked to the floating structure 3 of the first tip, the junction points 51 and 53 being attached to respective submerged buoys 7 and 7', two other side points are respectively two floating structures 3 and a second tip is a junction point 53 attached to a peripheral submerged buoy 7'. In case of a greater offshore farm 1 with more wind turbines 4 and more floating structures 3, this second tip could also be another common junction point 51 attached to a submerged buoy 7. This hexagonal pattern also enables the floating structures 3 and the wind turbines 4 to be spaced in an optimum way by, for example, a distance D1 about eight times the turbine rotor diameter for two floating structures 3 aligned in the dominant wind direction W. This distance D1 enables minimizing the wake effects and enables the wind turbine 4 placed behind having a greater productivity. Two adjacent floating structures 3 not aligned in the dominant wind direction may be spaced for example by a distance D2 equals to about six times the turbine rotor diameter in order to maximize the density of wind turbines 4 in the offshore wind farm 1.

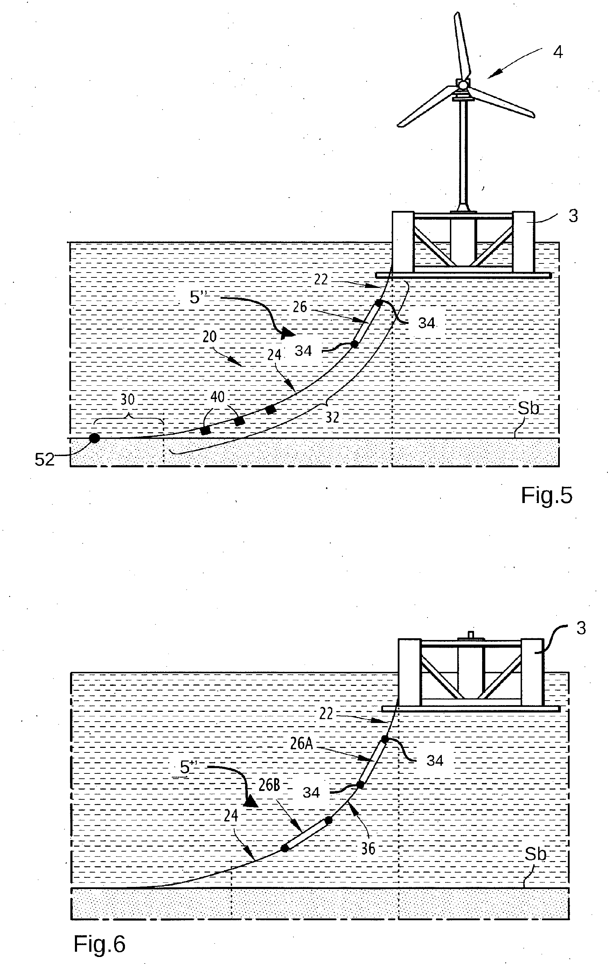

Referring to figures 5 and 6, at least one peripheral mooring line 5" could comprise a first segment 22 and at least one intermediate segment 26 attached to the first segment 22.

The peripheral mooring line 5" could also comprise a second segment 24 able to be attached to the seabed Sb via the mooring point 52. An intermediate segment 26 could be placed between the first segment 22 and the second segment 24.

For peripheral mooring line 5" having a common junction point 53 above the seabed Sb, the second segment 24 or an intermediate segment 26 can be connected, to the peripheral submerged buoy 7'.

As visible in figure 5, the first segment 22 is able to be attached to the floating structures 3.

The first segment 22 and the second segment 24 present therefore a significant stiffness, notably greater than the stiffness of the intermediate segment 26.

On the example shown on figures 5 and 6, each peripheral mooring line 5" comprises a resting part 30 resting on the seabed Sb and a raised part 32 away from the seabed Sb.

However, in a variant, the peripheral mooring line 5" does not comprise a resting part 30 on the seabed Sb, notably in case of taut mooring.

Each intermediate segment 26 is arranged in the raised part 32.

Each intermediate segment 26 is therefore away from the seabed Sb, avoiding abrasion of the intermediate segment 26 by contact 5 with the seabed Sb.

The performance of the intermediate segment 26 is not impacted by its location in the raised part 32. However, the intermediate segment 26 is arranged preferably deep enough, notably deeper than 20 m, to avoid UV exposure and to limit marine growth. Preferably, the intermediate segment 26 is arranged in deep water, for example at a depth greater than 100 m.

In the example shown on figure 5, the peripheral mooring line 5" comprises a unique intermediate segment 26.

The intermediate segment 26 extends along a longitudinal direction between two extremities.

The intermediate segment 26 is connected at a first extremity to the first segment 22 via an interface 34.

The intermediate segment 26 can be connected at a second extremity, opposed to the first extremity to the second segment 24 or to a peripheral submerged buoy 7' via another interface.

In the example shown in figure 6, the peripheral mooring line 5" comprises two intermediate segments 26A, 26B.

The first intermediate segment 26A is connected to the first segment 22 and the second intermediate segment 26B to the second segment 24.

A connecting segment 36 is arranged between the first intermediate segment 26A and the second intermediate segment 26B. The connection segment 36 presents a similar structure to the first segment 22 and the second segment 24.

In a variant not represented, the first intermediate segment 26A and the second intermediate segment 26B are connected directly to each other, without the presence of a connection segment 36.

The skilled person will understand that, in a variant, the peripheral mooring line 5" may comprise more than two intermediate segments 26, for example three or four intermediate segments 26. A connection segment 36 could be arranged between two intermediate segments 26.

Each intermediate segment 26 is formed of an elastomeric material. In particular, the intermediate segment 26 can be made of a single material.

Therefore, the intermediate segment 26 is devoid of other materials or mechanical pieces in addition to the elastomeric material. The intermediate segment 26 only comprises the elastomeric material arranged between the two interfaces 34.

The intermediate segment 26 is preferably only able to respond to a single mode of solicitation, here a traction applied by the first and second segments 22, 24.

The single material composing the intermediate segment 26 can be chosen between: natural rubber; thermoplastic elastomer; polychloroprene and hydrogenated nitrile butadiene rubber.

Advantageously, each intermediate segment 26 can be a multi-stranded line. In particular, the intermediate segment 26 may comprise about 100 strands of the elastomeric material; for example, braided together.

Each intermediate segment 26 could present advantageously a cylindrical shape extending between the first segment 22 and the second segment 24.

Each intermediate segment 26 could present a cumulative length lower than 40 m, advantageously lower than 15 m.

Each intermediate segment 26 could present a diameter comprised between 30 cm and 120 cm.

Each intermediate segment 26 may be able to provide a maximal extension greater than 100 % of the rest length of the intermediate segment 26, advantageously a maximal extension greater than 300 %, even more advantageously greater than 500 %. Typically, each intermediate segment 26 could present a maximal elongation length greater than 10 m.

The elasticity of the intermediate segment 26 may be provided by the elastomeric material that elongates when the peripheral mooring line 5" is subjected to a tensile stress. It allows to limit the maximum tension supported by the peripheral mooring line 5".

Each intermediate segment 26 could present a minimal breaking strength greater than 18 MPa, advantageously greater than 25 MPa. Each intermediate segment 26 could also present a minimal breaking load greater than 400 t, advantageously greater than 1200 t.

The intermediate segment 26 could present a creep lower than 20%, advantageously lower than 10%. The creep is the permanent elongation from its initial length due to stretching of the polymer. By initial length it is understood the length at the beginning of the service life, without load.

The peripheral mooring line 5" according to the invention is therefore able to support the severe tension applied to the peripheral mooring line 5" due to the severe environmental conditions. The intermediate segment 26 allows to have a significant elongation. This makes it possible to more effectively compensate for the lateral movements applied to the wind farm 1. This is even more advantageous when the inner mooring lines 5' are connected to a submerged boy 7.

As visible in figure 5 in an option, each peripheral mooring line 5" could comprise at least a clump weight 40 arranged on the second segment 24. In a variant not represented, the peripheral mooring line 5" is devoid of any clump weight 40, notably in case of taut mooring. The clump weights 40 enable to add some weight to the second segment 24 increasing the catenary effect of the line. This enables to reduce the mean offset of the floating structure 3 by increasing the restoring force of the line till the clump weights are all lifted. The other advantage of the clump weights is the reduction of the vertical load at the anchor location should drag embedment anchor be used.

The peripheral mooring line 5" is advantageously devoid of an antifouling treatment.

In conventional mooring lines, marine growth is not treated. In deep water, polyester rope is conventionally located deeper along the line to avoid marine growth, for example lower than 150 m deep.

The peripheral mooring line 5" according to the invention enables to eliminate the need for antifouling treatment due to the large deformations of the intermediate segment 26 and due to the material used for the intermediate segment 26, preventing the aquatic organisms from growing themselves to the peripheral mooring line 5".

## Claims

1. Offshore wind farm (1) comprising at least three floating structures (3) designed to receive a wind turbine (4), each floating structure (3) comprising at least three mooring lines (5', 5"), each mooring line (5', 5") being attached to a mooring point (51, 52, 53) arranged around said floating structure (3), the mooring lines facing inward from the offshore wind farm (1) forming the inner mooring lines (5') of the offshore wind farm (1) and the mooring lines facing outward from the offshore wind farm (1) forming the peripheral mooring lines (5") of the offshore wind farm (1),
wherein at least one peripheral mooring line (5") comprises:
- a first segment (22) able to be attached to the floating structures (3),
- at least one intermediate segment (26) formed of an elastomeric material attached to the first segment (22).

2. Offshore wind farm (1) according to claim 1, wherein two adjacent floating. structures (3) have at least one of their peripheral mooring lines (5") crossing each other, at least one of these peripheral mooring lines comprises a buoyancy element.

3. Offshore wind farm (1) according to claim 2, wherein only one of the crossing peripheral mooring lines (5") comprises a buoyancy element in order to pass above the other peripheral mooring line (5").

4. Offshore wind farm (1) according to claim 2, wherein two crossing peripheral mooring lines (5") have a common junction point (53) above the seabed (Sb), the buoyancy element being a peripheral submerged buoy (7') moored to the seabed (Sb) and to which one the common junction point (53) is attached to, this peripheral submerged buoy (7') comprising at least one additional mooring line (5‴) connecting the peripheral submerged buoy (7') to a mooring point (54) on the seabed (Sb).

5. Offshore wind farm (1) according to claim 4, wherein the peripheral submerged buoy (7') comprises two additional mooring lines (5‴), each additional mooring line (5‴) being aligned with a peripheral mooring line (5") attached to the peripheral submerged buoy (7').

6. Offshore wind farm (1) according to anyone of the previous claims, wherein the mooring lines (5', 5") are made of fiber ropes.

7. Offshore wind farm (1) according to anyone of the previous claims, wherein the floating structures (3) are placed in such a way that the mooring lines (5', 5") form a hexagonal pattern.

8. Offshore wind farm (1) according to anyone of the previous claims, wherein the intermediate segment (26) of the peripheral mooring lines (5") is able to provide a maximal extension greater than 100 % of the rest length of the intermediate segment (26), advantageously a maximal extension greater than 300 %;

9. Offshore wind farm (1) according to anyone of the previous claims, wherein the intermediate segment (26) presenting a minimal breaking strength greater than 18 MPa, advantageously greater than 25 MPa.

10. Offshore wind farm (1) according to anyone of the previous claims, wherein the intermediate segment (26) presents a minimal breaking load greater than 400 t, advantageously greater than 1200 t.

11. Offshore wind farm (1) according to anyone of the previous claims, wherein the intermediate segment (26) presents a creep lower than 20%, advantageously lower than 10%.

12. Offshore wind farm (1) according to anyone of the previous claims, wherein the intermediate segment (26) presents a cumulative length lower than 40 m, advantageously lower than 15 m.

13. Offshore wind farm (1) according to anyone of the previous claims, wherein the intermediate segment (26) is made of a single material.

14. Offshore wind farm (1) according to the previous claim, wherein the single material is chosen between:
- natural rubber;
- thermoplastic elastomer;
- polychloroprene; and
- hydrogenated nitrile butadiene rubber.

15. Offshore wind farm (1) according to anyone of the previous claims, wherein the intermediate segment (26) is a multi-stranded line.
